# EUROPEAN PATENT APPLICATION

(11) **EP 0 756 129 A2**
(43) Date of publication of application: **29.01.1997**
(21) Application number: 96112047.4
(22) Date of filing: 25.07.1996
(51) Int. Cl.: F16L 55/10, F16L 55/42, E21B 36/00, F16L 53/00, C09K 3/00, B01J 13/00

(54) **Method and apparatus for forming solid phase plugs in pipelines**

(30) Priority: 26.07.1995 US 506776
(71) Applicant: CANADIAN FRACMASTER LTD, Calgary, Alberta, T2P OJ1 (CA)
(72) Inventor: McLaws, James D., Edmonton, Alberta, T6K 0N6 (CA); Gotowik, Horst, Edmonton, Alberta, T5B 3K1 (CA); Mzik, Joseph, Calgary, Alberta, T2J 2X2 (CA)
(74) Representative: Müller-Boré & Partner Patentanwälte

(57) **Abstract**

There is described a method and a device for forming a solid phase plug in a conduit for fluid media, the device including a jacket in one or more pieces selected to fit around the conduit, the jacket being fabricated from a substance that is at least partially conformable to the surface of the conduit, and circulation tubing within the one or more pieces of jacket for circulating a cooling liquid, a cooling gas, or a combination of cooling liquid and cooling gas within the one or more pieces of jackets, to cool the liquid media in the conduit, and cause it to form a solid phase plug therein.

## Description

### FIELD OF THE INVENTION

The present invention relates to an apparatus and a method for forming solid phase plugs in conduits for fluid media. For instance, the present invention may be utilized to form a spaced pair of frozen plugs in a pipeline to isolate a portion of the pipeline between the plugs for repairs or testing.

### BACKGROUND OF THE INVENTION

The technique of forming one or more solid phase plugs in a conduit to seal a portion of the conduit utilizing liquid nitrogen as a cooling medium is, in general terms, known. U.S. Patent No. 4,220,012 dated September 2, 1980 issued to Brister, discloses an apparatus to form, temporarily, a sealed chamber circumferentially around a fluid transmission line. The chamber is then filled with liquid nitrogen, and agitated to induce boiling, and increase heat flow from the fluid transmission line to the gasifying nitrogen. It will be appreciated that such a cooling method is effective in quickly forming a solid phase plug. However, the annular chamber of N₂₍₁₎ presents significant containment difficulties and hazards, and so is expensive and difficult to apply. Moreover, the use of an annular sleeve-like chamber does not assure an even rate of cooling over the entire surface of the fluid transmission line, which may then suffer significant distortion due to uneven rates of expansion of the plug as it forms, in combination with uneven loss of elasticity in the material of the fluid transmission line. A typical result of the very high stress levels induced by uneven cooling rates and phase change rates is a phenomena known as ovalling, in which the fluid conduit is deformed during cooling to assume an elliptical cross-section. This ovalling introduces bending stresses causing for example compression on the outside wall surface and tension on the inside wall surface. The most immediate dangerous effect of this is loss of the seal between the annular N₂₍₁₎ chamber and the outer surface of the fluid transmission line.

Furthermore, the prior art contemplates that the solid phase plug will consist of the material already in the pipeline or water added thereto, water being used if the pipeline product is not conducive to freezing, such as a gas or a hydrocarbon based fluid. Even if the pipeline product is conducive to freezing, such as would be the case if it were water-based, freezing times will be prolonged and complete sealing across the frozen plug will be elusive. This arises from conductivity between the pipeline fluid in the zone of plug formation and the fluid on either side of the plug. This conductivity manifests itself in the nature of small streams, rivulets and capillaries of fluid flowing through the plug. Fluid in motion is difficult if not impossible to freeze completely and the small flow channels can result in leakage and slow down freeze times, adding to costs and pipeline downtime.

### SUMMARY OF THE INVENTION

It is therefore an object of the present invention to obviate and mitigate from the disadvantages of the prior art.

It is a further object of the present invention to provide a more reliable means of forming solid phase plugs in a conduit by means of circulation tubing for the circulation of a cooling liquid provided within a flexible jacket that fits about the fluid transmission line.

It is a further object in a preferred embodiment of the present invention to more reliably form solid phase plugs within a fluid transmission line by means of forming said plugs from slugs of high viscosity gel.

With respect to the latter object, the present invention addresses the problem of fluid conductivity in the zone of plug formation by proposing the addition to the interior of the pipeline of a slug of high viscosity gel situated to isolate the section of pipeline to be serviced, and the freezing of the gel to form the solid phase plug. The gel, once situated in the desired location, forms a relatively homogenous, immobile mass that prevents or at least minimizes problems of conductivity and hence freezes faster and more reliably than pipeline product or simple water. The gel can moreover be formulated to have a lower co-efficient of expansion than water which reduces the risk of damage or deformation of the pipeline wall.

The present invention also addresses the removal of solid phase plugs formed in conduits such as pipelines. Heretofore, these plugs have been removed by wrapping a heating apparatus, such as an electric strip heater around the pipeline, and gradually applying heat, until the plug melted away from the interior of the pipeline. The plug then was flushed down the pipeline by the pressure of fluid behind it, and it gradually melted and broke up. This method of removing a plug can cause damage to parts of the pipeline, however. For instance, if a valve or other mechanical device is struck by a moving plug, it can be damaged. The present invention remedies this problem and eliminates this potential hazard by providing a method of gradually melting a plug *in situ*, so that it gradually dissolves before it has an opportunity of floating free.

In a preferred embodiment, then, the present invention relates to a device for forming a solid phase plug in a conduit for fluid media including a jacket in one or more pieces selected to fit around a conduit, circulation tubing within said one or more pieces of jacket for circulating a cooling fluid in a liquid, gaseous or combination liquid and gaseous phase within said one or more pieces of jacket, to cool the liquid media in said conduit, and cause it to form a solid phase plug therein.

In another preferred embodiment, the present invention relates to a method of forming a solid phase plug in a conduit for fluid media, comprising the steps of circulating a cooling fluid about said conduit through one or more circulation pathways without direct contact between said conduit and said cooling fluid, said cooling fluid cooling a liquid media in said conduit to form a solid phase plug therein.

In accordance with yet another aspect of the present invention, there is provided a method of forming a solid phase plug in a conduit for fluid media, comprising the steps of locating a mass of high viscosity gel within said conduit where said solid phase plug is to be formed, circulating a cooling fluid about said conduit annularly opposite said mass of high viscosity gel, and cooling said high viscosity gel to a sufficiently low temperature to form a solid phase plug.

In accordance with yet another aspect of the present invention, there is also provided a method of melting a solid phase plug in a conduit for liquid media, by applying a source of heat to the surface of said conduit in the area of said solid phase plug, along a narrow longitudinal line, whereby said plug melts from end to end along a narrow arc, permitting flow of fluid media past said plug to melt same gradually.

In accordance with yet a further aspect of the present invention, there is also provided a high viscosity gel for forming solid phase plugs in fluid transmission lines under the influence of low temperature comprising (a) a water soluble polymer, (b) a buffer adjuster, and (c) a complexor.

### BRIEF DESCRIPTION OF THE DRAWINGS

In drawings that illustrate the present invention, by way of example:
Figure 1 is a side view, partially in phantom, of a first embodiment of one aspect of the present invention;
Figure 2 is a cross-sectional view, through line II-II in Figure 1;
Figure 3 is a side view, partially in phantom, of a second embodiment of one aspect of the present invention;
Figure 4 is a cross-sectional view through line IV-IV in Figure 3;
Figure 5 is a side view, partially in phantom, of a third embodiment of one aspect of the present invention;
Figure 6 is a cross-sectional view through line VI-VI in Figure 5.
Figure 7 is a side view, partially in phantom, of an embodiment of another aspect of the present invention;
Figure 8 is a cross-sectional view through line VIII-VIII in Figure 7.

### DETAILED DESCRIPTION

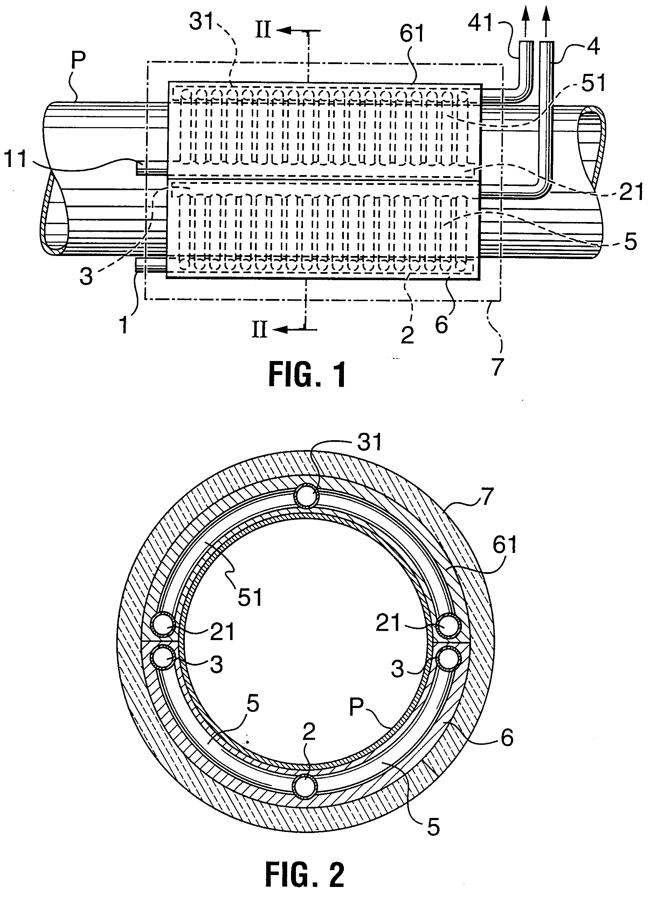

Referring now in particular to Figures 1 and 2, the present invention provides an apparatus for use on a pipeline P or other conduit for fluid media. The apparatus is configured as a circumferentially extending series of partial sleeves 6, 61 composed of an elastomeric material such as silicone, polyurethane, neopene™, or the like, in which are embedded cooling tubes 5, 51.

Each cooling tube begins at an inlet manifold 2, 21 that is adapted to receive a supply of N₂₍₁₎ at an inlet pipe 1, 11. The cooling tubes in a partial sleeve extend arcuately around a portion of the pipeline P, and terminate at outlet manifolds 3, 31, that are adapted to exhaust N_{2(g)} at an outlet pipe 4,41.

By embedding the cooling tubes 5, 51 in an elastomeric jacket, the liquid nitrogen (BP-195.8) is not permitted to come into direct contact with the pipe P surface, whereby overly rapid cooling of any given spot on the pipeline is avoided. The elastomer, which will be flexible at normal working temperatures before the N₂₍₁₎ is introduced, will contact all of the surface of the pipe P evenly, so that cooling will be more evenly accomplished. Moreover, a layer of grease, or other viscous medium may be applied to the pipeline surface before the application of the jackets 6, 61, to ensure that no air gaps exist that could lead to uneven cooling.

It will be appreciated that the cooling effect of the N₂₍₁₎ is accomplished by gasification, which will occur spontaneously at any terrestrial ambient temperature, and absorb during phase change, approximately 800 cal of heat per gram N₂. In order to ensure that this heat absorbing phenomena is not concentrated in one location, N₂₍₁₎ is introduced at more than one location around the perimeter of the pipe, as can be observed in Figures 1 to 6.

In Figures 1 and 2, an apparatus suitable for use on a mid-sized pipe (e.g. diameter 50 cm) is shown. It comprises two partial jackets 6, 61, each of which extends over one half the circumference of the pipe, the lower and the upper half respectively. In the lower jacket 6 is situated lower intake or inlet manifold 2, that receives a supply of N₂₍₁₎ via lower inlet pipe 1, that may be connected to a source of N₂₍₁₎. The N₂₍₁₎ flows from the lower inlet manifold 2 up cooling tubes 5, toward lower outlet manifolds 3, there being one lower outlet manifold 3 located on each side of the lower jacket 6. N_{2(g)} collected in the lower outlet manifolds 3 is vented to the atmosphere via lower outlet pipe 4. The system is mirrored in the upper jacket 61 as can be observed in Figure 2. Gasification of the N₂₍₁₎ to form N_{2(g)} occurs in the cooling tubes 5, which cannot, therefore, be overly long. If the cooling tubes 5 extend for too great a distance, the portions of them closest to the inlet manifold, and the outlet manifold, will absorb significantly less heat than the middle portion of the tube because, in the former case gasification will not yet be occurring, and in the latter case, gas will be tending to fill the tube. Therefore, nitrogen flow rates and temperature are carefully monitored and cooling tubes are kept to a relatively uniform size.

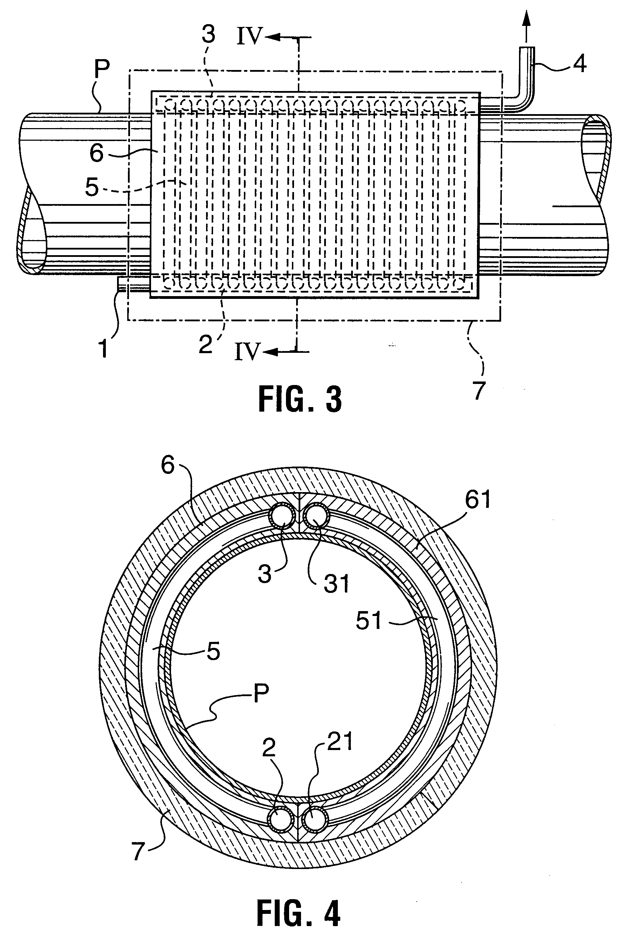

Accordingly, for use with pipelines of significantly lesser diameter, an embodiment such as that shown in Figures 3 and 4 may be utilized. In this embodiment, the jackets are side by side, instead of upper and lower, there being left and right inlet pipes 1, 11 (not illustrated), inlet manifolds 2, 21, cooling tubes 5, 51, outlet manifolds 3, 31 and outlet pipes 4, 41 (not illustrated).

It will be observed, however, that the cooling tubes 5, 51 each extend around half the circumference of the pipe P, from manifold to manifold, the apparatus of Figures 3 and 4 thereby being suitable for use with a pipeline having about half the circumference of that shown in Figures 1 and 2.

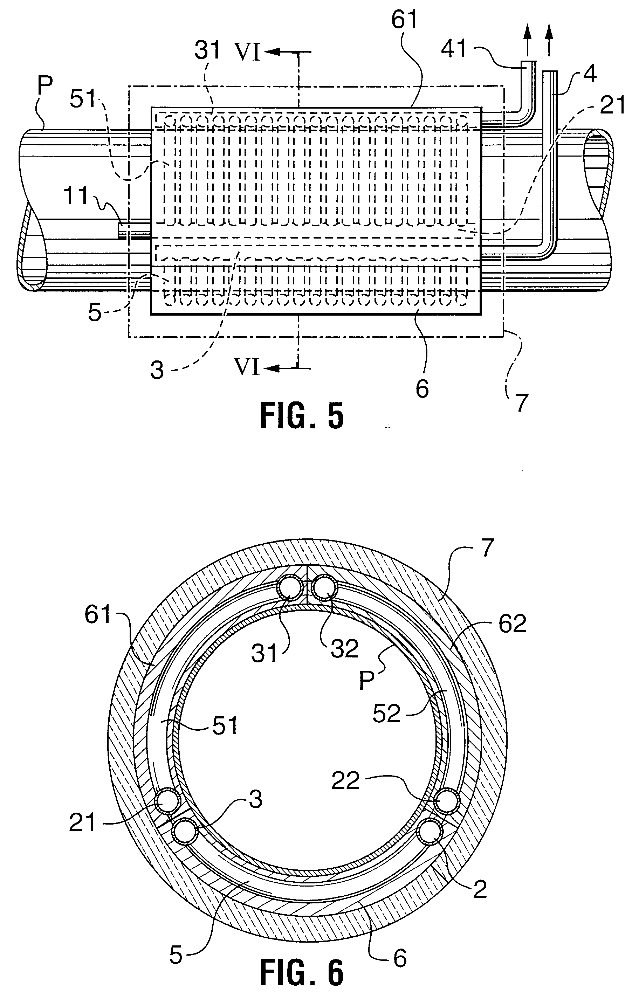

Referring to Figures 5 and 6 an embodiment of the present invention for use with larger pipelines is shown. In this embodiment, three partial jackets 6, 61, 62 are provided, each extending over one third of the circumference of the pipeline P, and each including an inlet manifold 2, 21 or 32, cooling tubes, 5, 51, 52, and an outlet manifold 3, 31, 22. It will be understood then that three inlet pipes, and three outlet pipes will also be provided. It will further be appreciated that for even larger pipes, more partial jackets may be provided, and in this regard, if cooling tubes 5 are manufactured from a flexible substance, including braided metal, that will not crack at extremely low temperatures, such as -190°C or -320°F, the same partial jackets may be used for the embodiments of Figures 3, 4, 5 and 6. The breadth of the partial jackets 6, 61, etc. may also be varied by utilization of narrower or wider cooling tubes 5, 51, etc. which in any event should be in the range of 2 cm to 5 cm. The cooling tubes may also be made of rigid materials, such as copper or stainless steel tubing. Other suitable materials will be obvious to one skilled in the art. The tubes are arranged in parallel, as shown, fairly close together. It is generally preferred that the distance between any two adjacent tubes not exceed about half the width of a tube, to avoid the formation of warm bands between the tubes on the pipeline.

The partial jackets are attached to the pipeline P by means of metal bands around the jackets, or any other attachment means, the selection of which will be a matter of choice for one skilled in the art. A jacketting layer of insulation 7 is slipped over the partial jackets 6, 61, etc. to maximize cooling efficiency, and for the safety of those working near the apparatus.

The partial jackets contain temperature sensors, the output of which in combination with the output of N₂ flow rate and pressure sensors are input into an appropriately programmed CPU which permits efficient operation of the device of the present invention.

It has been found advantageous when using the present apparatus to form the solid phase plug or plugs from a mass of high viscosity gel pumped into the pipeline and situated at the desired location for freezing. The applicants have discovered that the use of such gels provides for improved freezing times and better sealing of the fluid transmission line. In one embodiment contemplated by the applicant herein, the gel will consist generally of a water soluble polymer, a buffer adjuster and a complexor.

The water soluble polymer may be selected from the group consisting of guar gum, cellulose derivatives, xantham polymer and their modifications such as hydroxypropyl guar gum. Other suitable polymers include hydroxy, carboxy and alkyl guar gum present in an amount from 2 to 10 kg/m³.

The buffer adjuster is selected at the pH preference and the complexor may be selected from the group consisting of titanium, irconium, aluminum, chromium and borate compounds or any combination thereof, with borate being preferred.

An example of a suitable buffer adjuster is sodium hydroxide (2N NaOH) present in an amount from 0.1 to 5.0 1/m³ or equivalent.

The gel can additionally include a cross-linking agent such as sodium tetraborate, sodium perborate, boric acid or the mixture in solid or liquid form of the equivalent to sodium tetraborate from 0.5 to 4.0 kg/m³.

It can be advantageous if the gel breaks down after a predetermined amount of time to reduce its viscosity for cleanout purposes. A suitable gel breaker, the selection of which will be a matter of choice for one skilled in the art, may therefore be added to degrade the guar gum crosslinked polymer. Also advantageously, the gel can include an aliphatic alcohol such as methyl, ethyl or isopropyl alcohol useful to replace water in the gel where water contamination might otherwise be a problem.

In another aspect, the present invention provides an apparatus for the efficient and safe melting and removal of solid phase plugs from liquid media conduits.

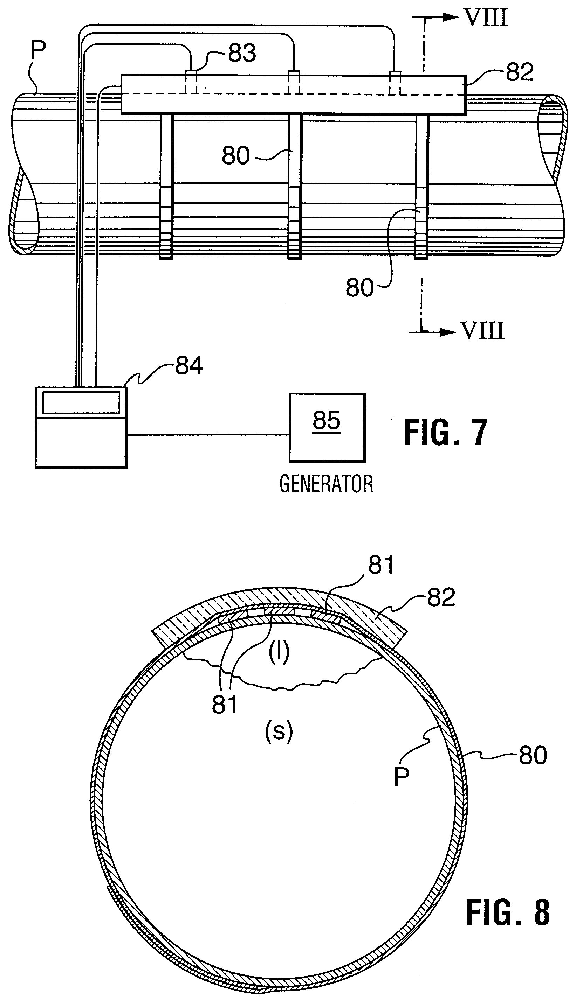

As shown in Figures 7 and 8, a pipeline P has strapped thereon by means of metal straps 80 (or other means, as will be obvious to one skilled in the art) one or more electrical heaters 81, that extend the length of the plug being melted. The heaters, the selection of which will be an obvious matter of choice, are mounted on only a narrow arc of the pipeline, as shown in Figure 8, so that as they heat the surface of the pipe, and the plug therein, the plug will melt around the heated area first. This causes the liquid in the pipeline to begin to flow whereby the plug is gradually melted *in situ* to a very much greater extent than previously. This avoids the likelihood of a large solid plug travelling in the pipeline and causing damage to some parts thereof.

An insulating layer 82 covers the heaters 81, for efficiency and safety, and temperature sensors 83 connected to a CPU 84 monitor and control the output of the heaters 81. A power source, such as a generator 85 provides electricity to the entire system, whereby the system may be operated at a remote location, notwithstanding the high power consumption of electrical heaters.

Numerous variations of the invention described herein will be obvious to one skilled in the art, and it is intended that the claims appended hereto, properly construed, include all such variations within their ambit.

## Claims

1. A device for forming a solid phase plug in a conduit (P) for fluid media including:
(i) a jacket (6,61) one or more pieces selected to fit around a conduit (P);
(ii) circulation tubing (2,3,21,31,1,4,5,11,41,51) within said one or more pieces of jacket (6,61) for circulating a cooling fluid in a liquid, gaseous or combination liquid and gaseous phase within said one or more pieces of jacket (6,61), to cool the liquid media in said conduit (P), and cause it to form a solid phase plug therein.

2. A device as claimed in claim 1, wherein said jacket (6,61) is fabricated from a substance that is at least partially conformable to the surface of the conduit (P).

3. A device as claimed in claims 1 or 2, wherein each of said one or more pieces of jacket (6,61) is arcuate, said pieces together forming an annular band around said conduit (P).

4. A device as claimed in claims 1, 2 or 3, wherein said circulation tubing (1,2,3,4,5,11,21,31 41,51) in each said piece of jacket (6,61) includes an inlet (1,11) for cooling fluid, an inlet manifold (2,21) for distributing said cooling fluid along the length of said piece of jacket (6,61), a plurality of arcuately extending tubes (5,51) extending from said inlet manifold (2,21) across said piece of jacket (6,61) an outlet manifold (3,31) for collecting cooling fluid from said arcuately extending tubes (5,51), and an outlet (4,41) for releasing cooling fluid from said piece of jacket (6,61).

5. A device as claimed in claim 4, wherein said inlet and outlet manifolds (3,4,31,41) define the approximate arcuate bounds of a piece of said jacket (6,61).

6. A device as claimed in any preceding claim, wherein said circulation tubing (1,2,3,4,5,11,21,31 41,51) is made of a material selected for the ability to withstand extremely low temperatures, said material being selected from the group including copper, brass, stainless steel or bronze.

7. A device as claimed in any preceding claim, wherein said cooling fluid is a cryogenic gas.

8. A device as claimed in any preceding claim, wherein said device includes means to monitor and adjust the flow rate of said cooling fluid in said jacket (6,61).

9. A method of forming a solid phase plug in a conduit (P) for fluid media, comprising the steps of:
circulating a cooling fluid about said conduit (P) through one or more circulation pathways (1,2,3,4,5,11,21,31,41,51) without direct contact between said conduit and said cooling fluid;
said cooling fluid cooling a liquid media in said conduit to form a solid phase plug therein.

10. A method of forming a solid phase plug in a conduit (P) for fluid media, comprising the steps of:
locating a mass of high viscosity gel within said conduit (P) where said solid phase plug is to be formed;
circulating a cooling fluid about said conduit annularly opposite said mass of high viscosity gel; and
cooling said high viscosity gel to a sufficiently low temperature to form a solid phase plug.

11. The method of claim 9 wherein said one or more circulation pathways (1,2,3,4,5,11,21,31,41,51) comprise circulation tubing (5,51) within a jacket (6,61) formed in one or more pieces selected to fit around said conduit (P), said jacket (6,61) being at least partially conformable to the surface of the conduit (P).

12. The method of claims 9 or 11 wherein said liquid media in said conduit is a high viscosity gel.

13. The method of any preceding claim including the additional step of monitoring and adjusting the flow rate of said cooling fluid about said conduit.

14. The method of claim 10, 12 or 13 wherein said gel comprises a water soluble polymer, a buffer adjuster and a complexor.

15. The method of claim 14 wherein said water soluble polymer is selected from the group including guar gum, hydroxy, carboxy and alkyl guar gums, cellulose derivatives, xantham polymer and modifications thereof including hydroxypropyl guar gum, and said complexor is selected from the group including titanium, irconium aluminum, chromium and borate compounds, or any combination thereof.

16. The method of claims 10, 13, 14 or 15 wherein said cooling fluid is circulated about said conduit through one or more circulation pathways (1,2,3,4 5,11,21,31,41,51) without direct contact between said conduit (P) and said cooling fluid.

17. The method of any preceding claim wherein said cooling fluid is a cryogenic gas.

18. A high viscosity gel for forming solid phase plugs in fluid transmission lines under the influence of low temperature comprising:
a) a water soluble polymer;
b) a buffer adjuster; and
c) a complexor.

19. A high viscosity gel as claimed in claim 18 wherein said water soluble polymer is selected from the group including guar gum, cellulose derivatives, xantham polymer and modifications thereof.

20. A high viscosity gel as claimed in claims 18 or 19 wherein said water soluble polymer is selected from the group including hydroxy, carboxy and alkyl guar gums.

21. A high viscosity gel as claimed in claims 18, 19 or 20 wherein said hydroxy propyl guar gum is present in a quantity of 2 to 10 kg per cubic metre.

22. A high viscosity gel as claimed in any preceding claim wherein said buffer adjuster is selected to provide a target pH.

23. A high viscosity gel as claimed in any preceding claim wherein said complexor is selected from titanium, irconium, aluminum, chromium and borate compounds, or any combination of these.

24. A composition as claimed in any preceding claim in which the buffer adjuster is sodium hydroxide.

25. A composition as claimed in claim 24 wherein the buffer is 2N NaOH, at a concentration in the range of 0.1 to 5.0 l/m³.

26. A composition as claimed in claim 23 in which the complexor is sodium tetraborate, sodium perborate, boric acid or the mixture of in a solid or liquid form equivalent to sodium tetraborate from 0.5 to 4.0 kg/m³.

27. A composition as claimed in any preceding claim wherein the high viscosity gel includes an aliphatic alcohol selected from the grouping including methyl, ethyl or isopropyl alcohol.

28. A composition as claimed in any preceding claim wherein the high viscosity gel includes a gel breaker which acts over a time period to degrade the guar gum cross-linked polymer and thereby reduce the viscosity of the gel.

29. A method of melting a solid phase plug in a conduit for liquid media, by applying a source of heat to the surface of said conduit in the area of said solid phase plug, along a narrow longitudinal line, whereby said plug melts from end to end along a narrow arc, permitting flow of fluid media past said plug to melt same gradually.
